# EUROPÄISCHE PATENTSCHRIFT

(11) **EP 3 276 768 B1**
(45) Veröffentlichungstag und Bekanntmachung des Hinweises auf die Patenterteilung: **24.04.2019**
(21) Anmeldenummer: 17181171.4
(22) Anmeldetag: 13.07.2017
(51) Int. Cl.: H02J 1/10, H02J 7/14, H02J 7/34, H02J 1/08

(54) **ELEKTRISCHES BORDNETZSYSTEM FÜR KRAFTFAHRZEUGE MIT EINEM KONVERTER UND EINEM HOCHLASTVERBRAUCHER**
ON-BOARD ELECTRICAL SYSTEM FOR MOTOR VEHICLES COMPRISING A CONVERTER AND A HIGH-LOAD CONSUMER
SYSTÈME DE RÉSEAU ÉLECTRIQUE DE BORD POUR VÉHICULES À MOTEUR POURVU D'UN CONVERTISSEUR ET D'UN CONSOMMATEUR À FORTE CHARGE

(30) Priorität: 29.07.2016 DE 102016213977
(43) Veröffentlichungstag der Anmeldung: 31.01.2018
(73) Patentinhaber: Ford Global Technologies, LLC, Dearborn, MI 48126 (US)
(72) Erfinder: Mohrmann, Björn, 52072 Aachen (DE); Schmitz, Peter, 52076 Aachen (DE); Warm, Armin, 52072 Aachen (DE); Bojahr, Manuel, 52070 Aachen (DE); Spijker, Engbert, 6361 BR Nuth (NL); Eifert, Mark, 60594 Frankfurt (DE)
(74) Vertreter: Dörfler, Thomas

(56) Entgegenhaltungen:
- DE-A1-102007 029 025
- DE-A1-102012 206 932

## Beschreibung

Die Erfindung bezieht sich auf ein elektrisches Bordnetzsystem für Kraftfahrzeuge und auf ein Verfahren zum Betreiben eines derartigen Bordnetzsystems.

Aus der DE 10 2012 206 932 A1 ist ein elektrisches Bordnetzsystem für Kraftfahrzeuge, insbesondere Pkws, mit einer Batterie, mit einer für das Aufladen der Batterie vorgesehenen Lichtmaschine, mit mindestens einem normalen Verbraucher, der schaltbar mit der Batterie verbunden ist, und mit einem Gleichspannungs-Gleichspannungs-Konverter, der auf einer Primärseite mit der Batterie und auf einer Sekundärseite unter Bildung eines Subnetzes mit einem Speicher und über einen (in der Entgegenhaltung nicht unmittelbar offenbarten) Schalter schaltbar mit einem Hochlastwiderstand, z.B. einen Aktuator mit hoher Leistung, verbunden ist, wobei der (in der Entgegenhaltung nicht unmittelbar offenbarte) Schalter in einer ersten Schaltstellung den Hochlastverbraucher mit dem Speicher und der Sekundärseite verbindet und mittels eines weiteren Schalters in dessen geschlossener Schaltstellung mit der Primärseite verbindet, wobei ein Steuergerät vorgesehen ist, dass die Schaltstellung der Schalter zwischen der ersten und der zweiten Schaltstellung steuert und betätigt, und eine Einrichtung zum Erfassen der aktuellen elektrischen Leistung des Hochlastverbrauchers vorgesehen ist, die dem Hochlastverbraucher zugeordnet ist und ausgangsseitig mit dem Steuergerät verbunden ist.

Aus der DE 10 2012 005 993 A1 ist ein Energie- bzw. Leistungsversorgungs-Regel-bzw. -Steuergerät für ein Fahrzeug bekannt, welches eine erste Elektrizitäts-Speichervorrichtung, um elektrische Energie bzw. Leistung zu einem Starter für ein Starten eines Motors zuzuführen, einen Generator, um kinetische Energie des Fahrzeugs während einer Verlangsamung des Fahrzeugs in elektrische Energie für eine Energierückgewinnung umzuwandeln, und eine zweite Elektrizitäts-Speichervorrichtung umfasst, welche mit dem Generator gekoppelt ist, um die elektrische Energie bzw. Leistung von dem Generator dort zu speichern. Darüber hinaus bezieht sich die Erfindung auf ein entsprechendes Leistungs- bzw.

Energieversorgungs-Regel- bzw. -Steuerverfahren für ein Fahrzeug und auf ein Computerprogramm-Produkt.

Aus US 2014/0084 817 A1 ist ein Verfahren für Energie- und Leistungsmanagement in dynamischen Systemen mit Superkondensatoren bekannt. Dabei wird ein Verbraucher 32 mit der Summe aus der Spannung einer Batterie und des Superkondensators in einem ersten Schaltzustand beaufschlagt. Im normalen Belastungszustand ist die Sekundärseite des Gleichspannungs-Gleichspannungs-Konverters mit dem Verbraucher 32 verbunden.

Aus US 2012/0261 982 A1 ist ein Vielspannungsbordnetzsystem für ein Kraftfahrzeug bekannt. Es werden mehrere Gleichspannungs-Gleichspannungs-Konverter verwendet, denen Kondensatoren zugeordnet sind. Über einen Wechselschalter können unterschiedliche Betriebszustände erreicht werden.

Aus US 2014/026 559 A1 ist ein elektrisches Bordnetzsystem mit hoher Leistung für ein Kraftfahrzeug bekannt. Es weist einen elektrischen Hochleistungsbus auf, der zumindest teilweise von einem Konverter versorgt wird, welcher seine Eingangsleistung von der Batterie des Fahrzeugs erhält. Der elektrische Hochleistungsbus kann zumindest teilweise von der Kraftfahrzeugbatterie abgekoppelt werden. Verbraucher mit hoher elektrischer Leistung, wie beispielsweise eine aktive Radaufhängung bzw. ein aktives Fahrwerk oder aktive Federung werden über den elektrischen Bus hoher Leistung versorgt.

Ein Verbraucher mit hoher elektrischer Leistung hat typischerweise eine maximale Leistungsaufnahme > 1 kW bzw. Stromaufnahme > 80 A, eine durchschnittliche Leistungsaufnahme 300 W bzw. Stromaufnahme 25 A.

Aus US 8971073 B2 sind ein System und ein Verfahren zum Überbrücken (Bypassen) von mehrstufigen Gleichspannungs-Gleichspannungs-Konvertern in Netzwerken mit Batterie bekannt. Es werden keine Kondensatoren eingesetzt.

Aus US 5,179,508 ist ein Spannungsversorgungssystem mit Batterie und einem Gleichspannungs-Gleichspannungs-Konverter bekannt. Dieser befindet sich stets im Leistungsfluss, er wird nicht überbrückt.

Zum weiteren Stand der Technik wird auf DE 10 2007 029 025 A1, DE 102 92 465 T5, DE 102 48 658 A1 und US 2015/0336 461 A1 verwiesen.

Aufgabe der Erfindung ist es, ausgehend von der DE 10 2012 206 932 A1 ein elektrisches Bordnetzsystem weiterzuentwickeln und insbesondere dahingehend auszulegen, dass ein Gleichspannungs-Gleichspannungs-Konverter überbrückt werden kann, wenn die Leistungsanforderung eines Verbrauchers hoher Leistung gering (z.B. kleiner 40% bis 60% der Nennleistung des Gleichspannungs-Gleichspannungs-Konverters) und/oder konstant (z.B. Schwankung des Stromwertes kleiner als 10% des Nennwerts der Leistung des Verbrauchers hoher Leistung) ist. Die Versorgung des Verbrauchers hoher Leistung soll jedoch über den Konverter erfolgen, wenn der Leistungsbedarf des Verbrauchers hoher Leistung hoch oder rasch ändernd (z.B. Schwankung des Stromwertes größer als 10% des Nennwerts der Leistung des Verbrauchers hoher Leistung innerhalb einer Sekunde) ist.

Diese Aufgabe wird gelöst durch die Merkmale des Anspruchs 1.

Durch die Erfindung wird die Energieeffizienz des Systems erhöht, wenn der Gleichspannungs-Gleichspannungs-Konverter überbrückt ist. Es können Konverter kleiner Baugröße eingesetzt werden, beispielsweise kann anstelle eines Konverters mit 300 W Nennleistung ein Konverter für 210 W eingesetzt werden. Eine ständige Belastung und ein ständiger Anfall von Verlustwärme im Konverter finden nicht statt. Der Konverter wird nur in relativ kurzen Phasen hohen Leistungsbedarfs genutzt und nur dann fällt Verlustwärme an. Dies ist vorteilhaft, es wird Energie, insbesondere Treibstoff, eingespart.

Beispiel "Versorgung eines Fahrwerkaktuators": Maximal erforderlich Leistung im dynamischen Betrieb (stark schwankende Last, z.B. Slalom): 210W, maximal erforderliche Leistung im Konstantbetrieb (konstante Last, z.B. lange Kurvenfahrt): 300W. D.h., der DC/DC-Konverter kann statt der Auslegung für die Kurvenfahrt auf die Auslegung des Slaloms verkleinert werden, da bei der langen Kurvenfahrt der DC/DC-Konverter überbrückt werden kann.

Über die Einrichtung zum Erfassen der Leistung wird der aktuelle Leistungsbedarf des Verbrauchers hoher Leistung erfasst. Diese Einrichtung kann beispielsweise den Strom erfassen, der durch den Verbraucher hoher Leistung fließt. Man geht dann davon aus, dass die Spannung bekannt ist, beispielsweise Batteriespannung ist, und kann dann durch Multiplikation die Leistung errechnen. Man kann aber auch die Leistung über Messen von Strom und Spannung erfassen. Man kann auch die tatsächlich am Verbraucher anliegende Spannung erfassen und damit den aktuellen Spannungsabfall berechnen, was wiederum ermöglicht, den Strom und entsprechend die Leistung zu errechnen.

Aufgrund der Einrichtung zum Erfassen der Leistung ist es möglich, ein Steuersignal zu erzeugen, dass dem Steuergerät, auch Steuerschaltung genannt, zugeleitet wird. Ist die aktuell gemessene Leistung geringer als der Schwellenwert, wird der Schalter in die erste Schaltstellung bewegt bzw. in dieser gehalten. Wird eine sich rasch ändernde Leistung erfasst, beispielsweise schwankt der Stromwert um mehr als 10% des Nennwerts der Leistung des Verbrauchers hoher Leistung innerhalb einer Sekunde, so wird ebenfalls die zweite Schaltstellung gewählt.

Der Wirkungsgrad eines DC/DC-Konverters ändert sich abhängig von seiner Ausgangsleistung und -spannung. Wenn ein DC/DC-Konverter für eine Last oder für einen Satz von Lasten mit verschiedenen Leistungsbedarfen bzw. Ebenen eingesetzt wird, kann es immer sein, dass er in einem Betriebsbereich mit niedrigem Wirkungsgrad arbeitet. Als Lösung kann ein DC/DC-Konverter überbrückt bzw. ausgeschaltet werden, wenn er in einem Bereich niedrigen Wirkungsgrads betrieben wird. In dem Fall werden die Lasten, die er versorgen soll, von einem besser geeignetem DC/DC-Konverter mit höherem Wirkungsgrad oder von der primären elektrischen Leistungsquelle direkt versorgt. Die primäre Quelle kann aus einer Lichtmaschine und Batterie gebildet werden, oder sie kann ebenfalls ein DC/DC-Konverter sein. Das ist häufig der Fall bei Hybrid-Fahrzeugen. Die Ausgänge von den DC/DC-Konvertern können mit einem großen Kondensator, oder mit einer Bank von UltraCaps, oder mit einer Zusatzbatterie verbunden sein.

Ein Problem bei der Umschaltung von einer Last auf mehrere Versorgungsquellen ist, dass die Last Spannungssprünge erfährt, die ihre Funktion negativ beeinflussen können. Lösungen zu diesem Problem sind auch ein Teil des Konzepts. Die Spannungen von den Quellen können erst abgeglichen werden, bevor der Schaltvorgang stattfindet, oder eine Methode zum Entfernen von Leistungsquellen durch Parallelbeschaltung und Einstellung der Ausgangsspannungen kann eingesetzt werden.

Vorgeschlagen wird eine Architektur mit vorzugsweise mehreren DC/DC-Konvertern oder Leistungsquellen, eine Strategie zur Auswahl der am besten geeigneten Quelle abhängig von ihrem Wirkungsgrad, und eine Regelstrategie, die einen Übergang zwischen Quellen ohne störende Spannungsänderungen erlaubt. Das Konzept ist für eine Anwendung in Fahrzeugen mit konventionellen Antrieben, Hybrid-Antrieben und elektrischen Antrieben geeignet. Es kann auch für Bordnetze in Flugzeugen und Schiffen eingesetzt werden.

Vorzugsweise ist der Schalter ein Wechselschalter, er hat zumindest eine Schaltzunge, die mit dem Verbraucher hoher Last verbunden ist. Er hat einen ersten Schaltkontakt, der mit der Sekundärseite des Konverters verbunden ist und einen zweiten Schaltkontakt, der mit der Primärseite des Konverters verbunden ist. Vorzugsweise sind entweder zwei Schaltzungen vorgesehen, so dass beide Pole der Sekundärseite und der Primärseite geschaltet werden können, oder es ist jeweils ein Pol der Primärseite und ein Pol der Sekundärseite miteinander verbunden, zweckmäßigerweise ist diese Verbindung an Masse gelegt. Im letzteren Fall ist nur ein Wechselschalter mit einer Schaltzunge notwendig.

Bei dem Steuern eines elektrischen Bordnetzes, wie es als solches oben beschrieben wurde, wird ständig bzw. in kurzen Zeitabständen (Sampling) der Leistungsbedarf des Verbrauchers hoher Leistung mittels einer Einrichtung zum Erfassen der Leistung ermittelt, das so gewonnene Signal über den aktuellen Leistungsbedarf des Verbrauchers hoher Leistung wird dem Steuergerät zugeleitet. In dem Steuergerät ist ein Schwellenwert definiert. Wird dieser Schwellenwert unterschritten, ist also der aktuelle Leistungsbedarf geringer als der Schwellenwert, so betätigt das Steuergerät den Schalter in die erste Schaltposition, in der der Konverter überbrückt ist. Ist jedoch der Leistungsbedarf höher als der Schwellenwert, betätigt die Steuerung den Schalter in die zweite Schaltstellung. Dies tut sie auch, wenn der Leistungsbedarf des Verbrauchers hoher Leistung in kurzen Zeitabschnitten schwankt, beispielsweise mehrfach innerhalb einer Sekunde um mehr als 10% seiner Nennleistung schwankt.

Weitere Merkmale und Vorteile der Erfindung ergeben sich aus den weiteren Ansprüchen sowie der nun folgenden Beschreibung eines nicht einschränkend zu verstehenden Ausführungsbeispiels der Erfindung, das unter Bezugnahme auf die Zeichnung näher erläutert wird. In dieser Zeichnung zeigt:
Fig. 1: ein elektrisches Schaltschema eines batteriegestützten Bordnetzes mit normalen Verbrauchern, das zwei Subsysteme mit jeweils einem Konverter und einem Verbraucher hoher Leistung hat,
Fig. 2: das Schaltschema wie Fig. 1, jedoch nun mit einer anderen elektrischen Energiequelle und
Fig. 3: eine prinzipielle Darstellung einer Schaltung wie in Fig. 1 oder 2 für ein Überbrücken durch Spannungsregeln.

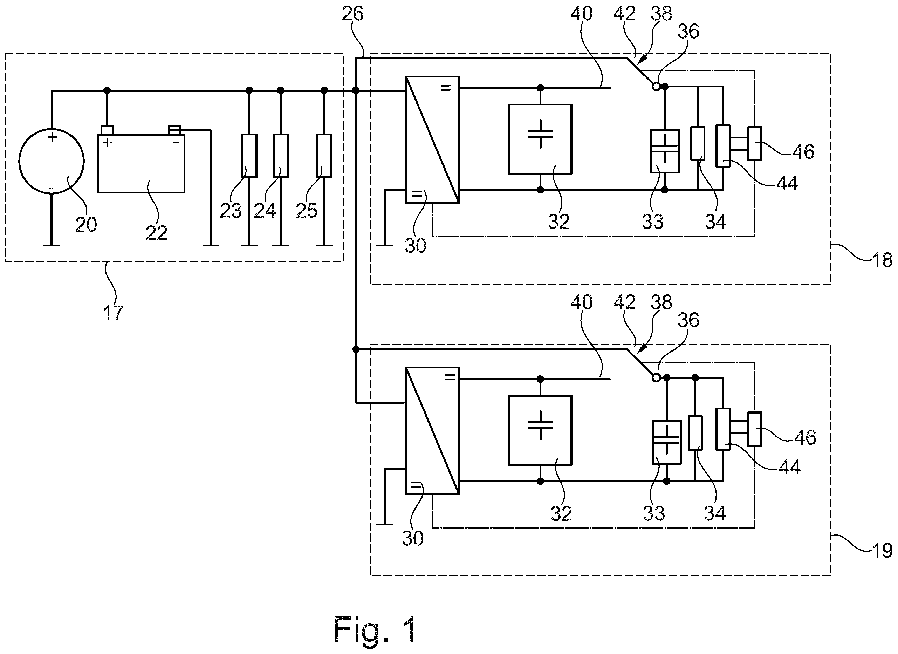

Figur 1 zeigt eine elektrische Schaltung aufgeteilt in drei Bereiche 17, 18 und 19. In einem ersten Bereich 17, der auch Primärbereich und Verteilungsnetzwerk genannt wird, befinden sich eine Lichtmaschine 20 und eine Batterie 22. Die Lichtmaschine 20 ist parallel zu der Batterie 22 geschaltet. Dem Fachmann sind die üblichen Einrichtungen, wie beispielsweise ein Regler zwischen Lichtmaschine 20 und Batterie 22 bekannt, aus Vereinfachungsgründen ist ein derartiger Regler hier nicht eingezeichnet. Er sorgt dafür, dass eine Verbindung mit und ein Laden der Batterie 22 nur dann stattfindet, wenn die Lichtmaschine 20 mit ausreichender Drehzahl betrieben wird. Im Primärbereich 17 sind noch drei normale Verbraucher 23 bis 25 vorgesehen. Sie können über nicht dargestellte Schalter ein- und ausgeschaltet werden. Bei diesen Verbrauchern 23 bis 25 handelt es sich beispielsweise um Scheibenwischermotoren, Lichtquellen, Elektromotoren für die Sitzverstellung und dergleichen.

Über eine Verbindungsleitung 26, die auf Pluspotential liegt, ist der Primärbereich 17 mit den Bereichen 18 und 19, nämlich einem oberen Subsystem und einem unteren Subsystem verbunden. Die Bereiche 18 und 19 sind baugleich. Im Folgenden wird daher nur das obere Subsystem beschrieben. In diesem ist ein Gleichspannungs-Gleichspannungs-Konverter 30, auch DC/DC-Konverter oder im Folgenden nur Konverter 30 genannt, angeordnet, er hat eine Primärseite mit zwei Anschlusspolen, die in der Figur links ist, und eine Sekundärseite mit zwei Anschlusspolen, die in der Figur rechts ist. Die Nennleistung des Gleichspannungs-Gleichspannungs-Konverters 30 beträgt beispielweise 300 W. Ein unterer Pol der Primärseite und ein unterer Pol der Sekundärseite sind miteinander verbunden und zudem auf Massepotential gelegt, auf dem hier auch der Minuspol der Batterie 22 liegt. Die Primärseite ist parallel zur Batterie 22 geschaltet. Parallel zur Sekundärseite ist ein Speicher 32 geschaltet, hier handelt es sich insbesondere um einen Superkondensator. Es kann auch eine normale Batterie 22 verwendet werden, der Vorteil eines Superkondensators liegt in der schnellen Aufladung und in geringeren Verlusten. Weiterhin befindet sich ein Verbraucher hoher Leistung 34, auch Hochlastverbraucher genannt, im Subsystem 26. Hier handelt es sich beispielsweise um einen Elektromotor hoher Leistung, wie er für aktive Fahrwerke eingesetzt wird. Er ist mit einem Anschluss an Masse gelegt, mit seinem anderen Anschluss liegt er an einer Schaltzunge 36 eines Schalters 38 an. Dieser hat einen ersten, unteren Schaltkontakt 40, der mit dem oberen Pol der Sekundärseite sowie des Speichers 32 verbunden ist. Er hat zudem einen zweiten, oberen Schaltkontakt 42, der mit der Verbindungsleitung 32, also dem oberen Pol der Primärseite, verbunden ist.

Dem Verbraucher hoher Leistung 34 ist eine Einrichtung zur Leistungserfassung 44 zugeordnet. Sie erfasst den aktuellen Leistungsbedarf des Verbrauchers hoher Leistung 34. Dies kann beispielsweise dadurch erfolgen, dass der durch den Verbraucher 34 fließende Strom erfasst wird und davon ausgegangen wird, dass die Spannung im Wesentlichen der bekannten mittleren Ausgangsspannung des Konverters 30 bzw. der Batterie 22 entspricht, also z.B. bei 12V liegt, wie hier eingezeichnet ist. Dann kann die aktuelle Leistung durch Multiplikation errechnet werden. Es kann aber auch zusätzlich die Spannung, die tatsächlich am Verbraucher hoher Leistung 34 anliegt, gemessen werden, so dass eine verbesserte Leistungserfassung möglich ist. Es kann aber auch über nur eine Spannungsmessung abgeschätzt werden, welcher Strom aktuell durch den Verbraucher hoher Leistung 34 fließt, da die tatsächlich am Verbraucher hoher Leistung 34 anliegende Spannung davon abhängt, wie hoch der durch diesen Verbraucher hoher Leistung 34 fließende Strom ist.

Parallel zum Verbraucher hoher Leistung 34 kann noch ein weiterer Energiespeicher 33, z.B. ein Kondensatormodul vorgesehen sein, entweder zusätzlich oder als Ersatz für den Energiespeicher 32.

Weiterhin ist ein Steuergerät 46 im Subsystem 26 vorgesehen. Es hat die Aufgabe, die Schaltstellung der Schaltzunge 36 zu steuern, siehe gestrichelte Linie. Es erhält sein Eingangssignal aus der Einrichtung zur Leistungserfassung 44. Im Steuergerät 46 ist ein Schwellenwert für die Leistung vorgegeben. Weiterhin erfasst das Steuergerät 46 eine Änderung der Leistung über der Zeit, beispielsweise durch Abfragen des aktuellen Leistungswertes (Sampling) in gewissen, kurzen Zeitabständen. Solange der Leistungsbedarf unterhalb des Schwellenwertes liegt, wird die in der Figur obere, erste Schaltstellung gewählt, die in der Figur als geschaltet dargestellt ist. Hierbei ist der Konverter 30 überbrückt, es erfolgt also ein Bypass des Konverters 30. Ist jedoch der aktuelle Leistungsbedarf des Verbrauchers hoher Leistung 34 oberhalb des Schwellenwertes, betätigt das Steuergerät 46 den Schalter 38 in die zweite, untere Schaltposition bzw. belässt sie ihn in dieser, die in der Figur nicht als geschaltet dargestellt ist. Dann ist die Schaltzunge 36 mit der Sekundärseite des Konverters und dem Speicher 32 verbunden bzw. bleibt mit ihr verbunden.

Das Steuergerät 46 entscheidet, welche elektrische Leistungsquelle eine Last versorgt. Die Leistungsquellen sind entweder die Batterie 22, die Lichtmaschine 20 (Generator) oder ein DC/DC-Konverter. Jeder kann wahlweise mit einem großen Kondensator, UltraCapacitor oder Batterie am Ausgang permanent verbunden werden.

Zwei Kriterien werden vom Steuergerät 46 berücksichtigt, um zu entscheiden, welche Leistungsquelle für die Versorgung eines Verbrauchers zu wählen ist:
a. Die Entscheidung wird vorgenommen, um die Quelle mit dem höchsten Wirkungsgrad für die geforderte Leistung zu wählen, falls diese Quelle ausreichend dimensioniert ist, um die geforderten Leistungsspitzen zu versorgen.
b. Falls ein Verbraucher hohe Leistungsspitzen fordert, kann das Steuergerät 46 eine Quelle auswählen, die solche Spitzen mit einer größeren Wahrscheinlichkeit versorgen kann. Als Beispiel: eine Lichtmaschine und herkömmliche Bleibatterie kann hohe Spitzenströme nicht immer versorgen, aber eine Leistungsquelle, die aus einem DC/DC-Konverter und einem UltraCapacitor besteht, kann hohe Spitzenströme besser und zuverlässiger versorgen. Deswegen wird eine solche Quelle gewählt, wenn bestimmte Verbraucher aktiviert werden.

Wenn sich die Leistung, die der Verbraucher hoher Leistung 34 abruft, in kurzen Zeitabständen ändert, beispielsweise innerhalb von einer Sekunde zweimal und insbesondere häufiger mehr als 10% der Nennleistung des Verbrauchers hoher Leistung 34 variiert, wird auch die Schaltstellung 2 gewählt. Vorzugsweise wird auf eine zweimalige und insbesondere häufigere Änderung innerhalb von einer halben oder einer Zehntel-Sekunde von mehr als 10% der Nennleistung des Verbrauchers hoher Leistung 34 abgestellt.

Insbesondere im Fall von einem Hybrid-Fahrzeug ist es möglich, mehrere DC/DC-Konverter als primäre Leistungsquelle zu haben. Das ist zum Beispiel der Fall, wenn das Fahrzeug ein Plug-In-Hybrid oder BEV ist, und das Niederspannungsnetz vom Hausnetz (Steckdose) oder von einem Antriebssystem versorgt wird. In dem Fall wählt das Steuergerät 46 die Quelle mit dem höchsten Wirkungsgrad für die geforderte Leistung.

Die geforderte Leistung kann durch gemessene Spannung und Strom berechnet werden. Sie kann auch mit einem Feed-Forward-Ansatz erkannt werden. In diesem Fall überwacht das Steuergerät 46 die Aktivierung von einem oder mehreren Verbrauchern. Wenn ein Verbraucher aktiviert wird, wird seine Last, die schon bekannt und hinterlegt ist, verwendet um zu entscheiden, welche elektrische Leistungsquelle am besten geeignet ist. Diese Methode hat die Vorteile, dass sie keine zusätzlichen Sensoren benötigt, und keine Zeit notwendig ist, um die Leistung zu berechnen.
Abhängig von der Entscheidung des Steuergeräts 46 werden eine oder mehrere Leistungsquellen gewählt. Abhängig von der gewählten Ausführung des Konzepts, geschieht das durch Überbrücken mit einem mechanischen oder Halbleiter-Schalter oder durch die Anhebung der Ausgangsspannung einer ausgewählten Quelle, wenn die Quellen parallel geschaltet sind, wie oben dargestellt. Wenn eine Quelle so ausgewählt ist, ist es ebenfalls möglich, die Ausgangsspannungen der verbleibenden Quellen zu senken.

Falls eine Quelle durch die Überbrückung einer oder mehrerer Quellen mit einem mechanischen oder Halbleiter-Schalter geschieht, kann die Ausgangsspannung vorher eingestellt werden, damit die Last minimale oder keine Änderung der Versorgungsspannung erfährt. Die Ausgangsspannung der alten Quellen kann ebenfalls eingestellt werden, damit der Übergang glatt verläuft. Nachdem der Übergang stattgefunden hat, kann die Ausgangspannung der ausgewählten Quelle zu einer optimalen Spannung geregelt werden. Diese Spannung kann optimal bezüglich Wirkungsgrad, Lebensdauer von elektrischen Verbrauchern oder anderen Kriterien ausgewählt werden. Beim Regeln der Spannung soll der Spannungs-Zeit-Gradient möglichst so ausgewählt werden, dass die Funktionen der Verbraucher nicht gestört werden. Nachdem der Übergang stattgefunden hat, kann eine Leistungsquelle, die überbrückt würde, komplett ausgeschaltet werden, um Verluste durch Leerlaufleistung zu vermeiden.

Die Erfindung ermöglicht ein Rückgewinnen elektrischer Energie, wenn der Verbraucher hoher Leistung 34 mechanisch durch äußere Kräfte bewegt wird und als Generator wirkt. Dies ist der Fall, wenn er beispielsweise als Elektromotor ausgebildet ist. In einem aktiven Fahrwerk wirken auf die Elektromotoren, die für die Einstellung von Fahrwerkskomponenten zuständig sind, auch rücktreibende, zumeist von der Straße ausgeübte Kräfte, die die Elektromotoren verstellen, was wiederum zur Erzeugung einer elektrischen Leistung führt. Je nach Schaltstellung wird diese Energie der Batterie 22 des Fahrzeugs oder dem Speicher 32 zugeführt. Auf diese Weise findet ein Rekuperieren statt.

Das elektrische Bordnetzsystem für Kraftfahrzeuge hat eine Batterie 22, eine Lichtmaschine 20 und mindestens einen normalen Verbraucher 23-25, der schaltbar mit der Batterie 22 verbunden ist. Ein Gleichspannungs-Gleichspannungs-Konverter 30 ist auf seiner Primärseite mit der Batterie 22 und auf seiner Sekundärseite unter Bildung eines Subnetzes mit einem Speicher 32 und über einen Schalter 38 schaltbar mit einem Hochlastwiderstand 34, z.B. einen Aktuator mit hoher Leistung, verbunden. Der Schalter 38 verbindet in einer ersten Schaltstellung den Hochlastverbraucher 34 mit dem Speicher 32 und in einer zweiten Schaltstellung mit der Primärseite. Das Steuergerät 46 steuert und betätigt die Schaltstellung des Schalters 38 zwischen der ersten und der zweiten Schaltstellung. Eine Einrichtung zum Erfassen der aktuellen elektrischen Leistung 44 des Hochlastverbrauchers 34 ist dem Hochlastverbraucher 34 zugeordnet und ausgangsseitig mit dem Steuergerät 46 verbunden.

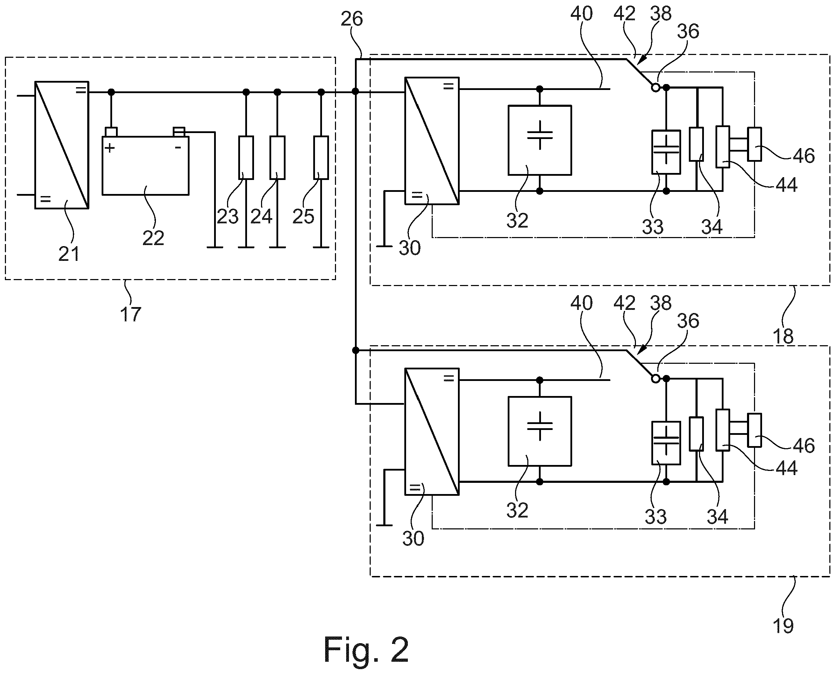

Fig. 2 stimmt mit Fig. 1 überein mit folgender Ausnahme: Statt der Versorgung des 12V Bordnetzes mittels der Lichtmaschine 20 erfolgt nun die Versorgung über einen DC/DC-Konverter 21, wie es z.B. bei Hybrid- und Elektrofahrzeugen der Fall ist.

Wenn ein DC/DC-Konverter überbrückt oder abgekuppelt wird, müssen die Lasten, die er versorgt, immer von einem zweiten DC/DC-Konverter oder von der primären elektrischen Leistungsquelle versorgt werden. Wie oben beschrieben, kann die primäre Quelle aus einer Lichtmaschine und Batterie gebildet werden, oder sie kann ein DC/DC-Konverter sein, der vom Hochspannungssystem versorgt ist. Es gibt zwei grundsätzliche Methoden, einen DC/DC-Konverter aus der Versorgung zu entfernen, um den Wirkungsgrad vom gesamten System bzw. Fahrzeug zu verbessern.

Wie in Fig. 1 und 2 dargestellt, kann ein DC/DC-Konverter aus der Versorgung mit einem herkömmlichen Schalter entfernt werden. In dem Fall soll er bevorzugt komplett ausgeschaltet werden, um Leerlaufverluste zu vermeiden. Entweder die primäre elektrische Leistungsquelle oder ein zweiter DC/DC-Konverter wird in dem Fall die Versorgung übernehmen. Um zu vermeiden, dass die Last Spannungsschwankungen erfährt wenn ein DC/DC-Konverter entfernt wird, wird der neue DC/DC-Konverter oder die primäre Leistungsquelle bevorzugt so gesteuert, dass die Spannung an der Last gleich bleibt, wenn der Übergang stattfindet. Falls die primäre Leistungsquelle so gesteuert wird, wird er möglichst langsam zu der neuen Spannung gesteuert, um zu vermeiden, dass die restlichen Verbraucher SpannungsSchwankungen erfahren. Falls die primäre Leistungsquelle die Versorgung übernimmt, kann er anschließend langsam zurück zu seiner ursprünglichen Spannung geregelt werden.

Figur 1 und 2 zeigen konventionelle Schalter, die einen DC/DC-Konverter überbrücken. Bipolar-Transistoren oder MOSFETs können ebenfalls als Schalter dienen, wenn ein DC/DC-Konverter so überbrückt wird.

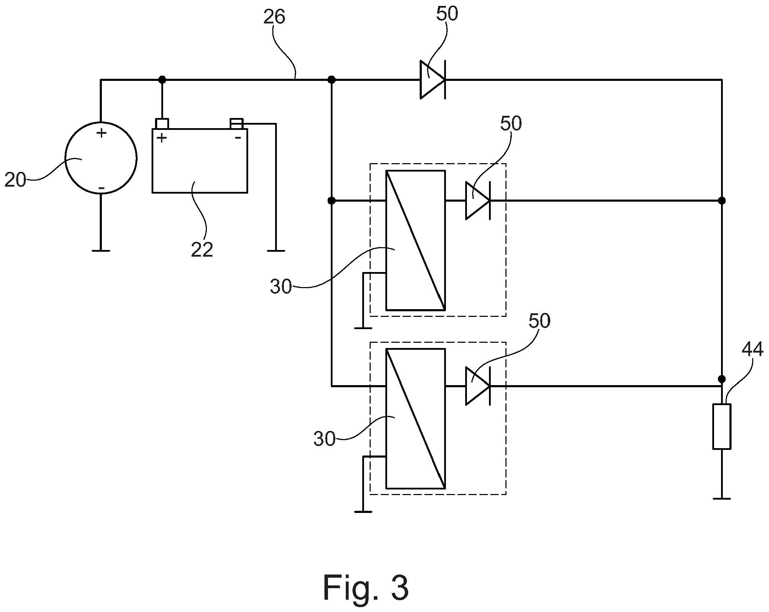

Fig. 3 zeigt eine Methode, einen DC/DC-Konverter aus der Versorgung aktiv zu entfernen. Es sind zwei unterschiedliche elektrische Leistungsquellen, die Konverter 30 (oben) bzw. 30 (unten) parallel geschaltet. Die Einstellung der Ausgangsspannungen dieser Konverter 30 erfolgt wie oben beschrieben und unter Berücksichtigung der folgenden Überlegungen:
Jeder DC/DC-Konverter 30 hat eine Diode 50, die mit einem seiner beiden Ausgangspole verbunden ist und verhindert, dass Strom in den DC/DC-Konverter fließt, wenn die Spannung der primären elektrischen Leistungsquelle oder die Ausgangsspannung eines zweiten DC/DC-Konverter größer ist als seine eigene Ausgangsspannung. In diesem Fall wird ein DC/DC-Konverter aus der Versorgung entfernt, wenn die Ausgangsspannung von der primären Quelle oder die Ausgangsspannung eines zweiten DC/DC-Konverters größer ist als seine Ausgangsspannung. In diesem Fall wird ein Konverter effektiv aus der Versorgung genommen, als ob er mit einem Schalter mit der Last verbunden ist. Diese Methode hat folgenden Vorteil: Wenn die gewählte Quelle (primäre Quelle oder zweiter DC/DC-Konverter) gesättigt wird (ihre höchste Leistung erreicht), sinkt die Ausgangsspannung automatisch. In diesem Fall übernimmt die verbleibende Quelle die Versorgung der Last, ohne dass es eine Unterbrechung in der Stromzufuhr oder eine schnelle Änderung der Spannung an der Last gibt.

## Patentansprüche

1. Elektrisches Bordnetzsystem für Kraftfahrzeuge, insbesondere Pkws, mit einer Batterie (22), mit einer für das Aufladen der Batterie (22) vorgesehenen Lichtmaschine (20), mit mindestens einem normalen Verbraucher (23-25), der schaltbar mit der Batterie (22) verbunden ist, und mit einem Gleichspannungs-Gleichspannungs-Konverter (30), der auf einer Primärseite mit der Batterie (22) und auf einer Sekundärseite unter Bildung eines Subnetzes mit einem Speicher (32) und über einen Schalter (38) schaltbar mit einem Hochlastwiderstand (34), z.B. einen Aktuator mit hoher Leistung, verbunden ist, wobei der Schalter (38) in einer ersten Schaltstellung den Hochlastverbraucher (34) mit dem Speicher (32) und der Sekundärseite und in einer zweiten Schaltstellung mit der Primärseite verbindet, ein Steuergerät (46) vorgesehen ist, das die Schaltstellung des Schalters (38) zwischen der ersten und der zweiten Schaltstellung steuert und betätigt, eine Einrichtung zum Erfassen der aktuellen elektrischen Leistung (44) des Hochlastverbrauchers (34) vorgesehen ist, die dem Hochlastverbraucher (34) zugeordnet ist und ausgangsseitig mit dem Steuergerät (46) verbunden ist, das Steuergerät (46) den Schalter (38) in der ersten Schaltstellung positioniert, wenn der Leistungsbedarf des Hochleistungsverbrauchers (34) kleiner als 40 bis 60% der Nennleistung des Hochlastverbrauchers (34) ist und in der zweiten Schaltstellung positioniert, wenn der Leistungsbedarf sich innerhalb einer Sekunde mindestens einmal um mehr als 10% der Nennleistung des Hochlastverbrauchers (34) ändert.

2. Elektrisches Bordnetzsystem nach Anspruch 1, **dadurch gekennzeichnet, dass** der Schalter (38) eine Schaltzunge (36) aufweist, die mit dem Hochlastverbraucher (34) verbunden ist, dass der Schalter (38) einen ersten, unteren Schaltkontakt (40) aufweist, der mit dem Speicher (32) und einem oberen Pol der Sekundärseite verbunden ist, und dass der Schalter (38) einen zweiten, oberen Schaltkontakt (42) aufweist, der mit einem oberen Pol der Primärseite verbunden ist.

3. Elektrisches Bordnetzsystem nach einem der vorangegangenen Ansprüche, **dadurch gekennzeichnet, dass** der Schalter (38) ein Wechselschalter mit mindestens einer Schaltzunge (36) ist, dass die mindestens eine Schaltzunge (36) mit dem Hochlastverbraucher (34) verbunden ist, dass ein erster Schaltkontakt (36) mit der Sekundärseite und ein zweiter Schaltkontakt mit der Primärseite des Konverters (30) verbunden ist.

4. Elektrisches Bordnetzsystem nach einem der vorangegangenen Ansprüche, **dadurch gekennzeichnet, dass** einer der beiden Anschlüsse der Primärseite mit einem der beiden Anschlüsse der Sekundärseite des Konverters (30) verbunden ist, insbesondere, dass die Verbindung an Masse gelegt ist.

5. Elektrisches Bordnetzsystem nach einem der vorangegangenen Ansprüche **dadurch gekennzeichnet, dass** im Steuergerät (46) mindestens eine Schaltschwelle implementiert ist.

6. Elektrisches Bordnetzsystem nach einem der vorangegangenen Ansprüche **dadurch gekennzeichnet, dass** der Schalter in der zweiten Schaltstellung positioniert ist, wenn der Leistungsbedarf sich innerhalb einer Sekunde mindestens zweimal um mehr als 10% der Nennleistung des Hochlastverbrauchers (34) ändert.

## Claims

1. On-board electrical system for motor vehicles, in particular passenger cars, comprising a battery (22), comprising a generator (20) which is provided for charging the battery (22), comprising at least one normal consumer (23-25) which is connected to the battery (22) in a switchable manner and comprising a DC voltage/DC voltage converter (30) which, on a primary side, is connected to the battery (22) and, on a secondary side, is connected to a high load resistor (34), for example a high-load actuator, so as to form an electrical subsystem with a storage means (32) and such that it can be switched by means of a switch (38), wherein the switch (38) connects the high-load consumer (34) to the storage means (32) and the secondary side in a first switching position and to the primary side in a second switching position, a controller (46) is provided, which controller controls and operates the switching position of the switch (38) between the first and the second switching position, a device for detecting the actual electrical power (44) of the high-load consumer (34) is provided, which device is associated with the high-load consumer (34) and is connected at the output end to the controller (46), the controller (46) positions the switch (38) in the first switching position when the power requirement of the high-power consumer (34) is less than 40 to 60% of the rated power of the high-power consumer (34), and positions it in the second switching position when the power requirement changes at least once by more than 10% of the rated power of the high-power consumer (34) within one second.

2. On-board electrical system according to Claim 1, **characterized in that** the switch (38) has a switching tongue (36) which is connected to the high-load consumer (34), wherein the switch (38) has a first, lower switching contact (40) which is connected to the storage means (32) and to an upper pole of the secondary side, and wherein the switch (38) has a second, upper switching contact (42) which is connected to an upper pole of the primary side.

3. On-board electrical system according to either of the preceding claims, **characterized in that** the switch (38) is a changeover switch comprising at least one switching tongue (36), wherein the at least one switching tongue (36) is connected to the high-load consumer (34), wherein a first switching contact (36) is connected to the secondary side and a second switching contact is connected to the primary side of the converter (30) .

4. On-board electrical system according to one of the preceding claims, **characterized in that** one of the two connections of the primary side is connected to one of the two connections of the secondary side of the converter (30), in particular wherein the connection to ground is made.

5. On-board electrical system according to one of the preceding claims, **characterized in that** at least one switching threshold is implemented in the controller (46).

6. On-board electrical system according to one of the preceding claims, **characterized in that** the switch is positioned in the second switching position when the power requirement changes at least twice by more than 10% of the rated power of the high-power consumer (34) within one second.

## Revendications

1. Réseau de bord électrique pour véhicules à moteur, en particulier pour voitures personnelles, doté d'une batterie (22), d'une génératrice (20) prévue pour le chargement de la batterie (22), d'au moins un consommateur normal (23-25), connecté de manière commutable à la batterie (22), et d'un convertisseur continu-continu (30), lequel est connecté à la batterie (22) d'un côté primaire et, d'un côté secondaire, à une résistance de grande puissance (34), par exemple un actionneur de forte puissance, pour constituer un sous-réseau avec un accumulateur (32) de manière commutable par le biais d'un commutateur (38), dans lequel le commutateur (38) connecte dans un premier état de commutation le consommateur de forte puissance (34) à l'accumulateur (32) et au côté secondaire et dans un deuxième état de commutation avec le côté primaire, un appareil de commande (46) est prévu, commandant et actionnant l'état de commutation du commutateur (38) entre le premier et le deuxième état de commutation, un dispositif de saisie de la puissance électrique actuelle (44) du consommateur de forte puissance (34) est prévu, étant ordonné au consommateur de forte puissance (34) et connecté côté sortie à l'appareil de commande (46), l'appareil de commande (46) positionne le commutateur (38) dans le premier état de commutation lorsque la demande de puissance du consommateur de forte puissance (34) est de moins de 40 à 60 % de la puissance nominale du consommateur de forte puissance (34) et positionne le commutateur (38) dans le deuxième état de commutation lorsque la demande de puissance se modifie en moins d'une seconde au moins une fois de plus de 10 % de la puissance nominale du consommateur de forte puissance (34) .

2. Réseau de bord électrique selon la revendication 1, **caractérisé en ce que** le commutateur (38) comporte une languette de commutation (36), laquelle est connectée au consommateur de forte puissance (34), **en ce que** le commutateur (38) comporte un premier contact de commutation (40) inférieur, lequel est connecté à l'accumulateur (32) et à un pôle supérieur du côté secondaire, et **en ce que** le commutateur (38) comporte un deuxième contact de commutation (42) supérieur, lequel est connecté à un pôle supérieur du côté primaire.

3. Réseau de bord électrique selon l'une des revendications précédentes, **caractérisé en ce que** le commutateur (38) est un interrupteur à bascule doté d'au moins une languette de commutation (36), **en ce que** l'au moins une languette de commutation (36) est connectée au consommateur de forte puissance (34), **en ce qu'**un premier contact de commutation (36) est connecté au côté secondaire et un deuxième contact de commutation est connecté au côté primaire du convertisseur (30).

4. Réseau de bord électrique selon l'une des revendications précédentes, **caractérisé en ce qu'**une des deux connexions du côté primaire est connectée à une des deux connexions du côté secondaire du convertisseur (30), en particulier **en ce que** la connexion est reliée à la masse.

5. Réseau de bord électrique selon l'une des revendications précédentes, **caractérisé en ce qu'**au moins un seuil de commutation est implémenté dans l'appareil de commande (46).

6. Réseau de bord électrique selon l'une des revendications précédentes, **caractérisé en ce que** le commutateur est positionné dans le deuxième état de commutation, lorsque la demande de puissance se modifie en moins d'une seconde au moins deux fois de plus de 10 % de la puissance nominale du consommateur de forte puissance (34) .
